# EUROPEAN PATENT APPLICATION

(11) **EP 0 665 550 A2**
(43) Date of publication of application: **02.08.1995**
(21) Application number: 95300465.2
(22) Date of filing: 26.01.1995
(51) Int. Cl.: G11B 27/00, G10H 1/00, H04N 5/93, G11B 20/00

(54) **Video reproduction device**

(30) Priority: 26.01.1994 JP 7070/94; 18.02.1994 JP 44946/94
(71) Applicant: BROTHER KOGYO KABUSHIKI KAISHA, Nagoya-shi, Aichi-ken (JP); XING INC., Nagoya-shi, Aichi-ken (JP)
(72) Inventor: Hayashi, Koichi, c/o Brother Kogyo K.K., Nagoya-shi, Aichi-ken (JP); Takada, Hiroyuki, c/o Brother Kogyo K.K., Nagoya-shi, Aichi-ken (JP); Aoyama, Yasutada, c/o Brother Kogyo K.K., Nagoya-shi, Aichi-ken (JP); Chaya, Norio, c/o Brother Kogyo K.K., Nagoya-shi, Aichi-ken (JP); Omura, Kazuhiko, c/o Brother Kogyo K.K., Nagoya-shi, Aichi-ken (JP); Nishikawa, Hiroshi, c/o Xing Inc., Nagoya-shi, Aichi-ken (JP)
(74) Representative: Senior, Alan Murray

(57) **Abstract**

When it is judged that the latest set random variable R is equal to or lower than 24 in S730, it is determined that the latest reproduced chapter is of the image genre A. Therefore, the program proceeds to S735 and S740 to repeatedly generate a random variable R until the generated random variable R falls between 25 and 48, therefore indicating image genre F. On the other hand, when the latest set random variable R is higher than 24 in S730, it is determined that the most recently reproduced chapter is from the image genre F. Accordingly, the program proceeds to S745 and S750 to repeatedly generate a random variable R until the generated random variable R falls between 1 and 24, thereby representing a chapter from image genre A.

## Description

### BACKGROUND OF THE INVENTION

### 1. Field of the Invention

The present invention relates to a video reproduction device for reproducing videos (images), and more particularly to an image karaoke device which plays accompaniment music of a song to be sung while displaying the song lyrics and superimposed on a background image.

### 2. Description of the Related Art

Conventionally, there has been known an image karaoke device which reproduces data, from a video disk on image, lyric, and music for each song desired to be sung. Because data for several thousand songs must be stored in each device, an establishment which provides an image karaoke device for its customers must keep an extremely large number of video disks on hand. A special video disk housing case is provided to the image karaoke device for housing several video disks. An autochanger is provided for changing the video disks according to a request by a karaoke user. The space taken up by the autochanger and the special housing case has given rise to a need for a more compact device, especially in establishments that provide karaoke for customers.

United States Patent No.5,233,438 has proposed a more compact device for solving the above problem, wherein image data (video data) is stored separately from song data. While the song music is played, a background image formed based on the image data is displayed with the lyrics superimposed on the background image. The image data which becomes the background image is stored in video disks. Generally image data of two image genres are stored on each video disk. For example, when one video disk contains two hours of image data, one hour of image data could be devoted to Japanese ballads (i.e., Japanese enka) and one hour could be devoted to popular songs.

Stated in further detail, a plurality of images, corresponding to either Japanese ballads or popular songs, are stored in approximately four minute segments. Image data for images is retrieved in the order stored. For example, when a user requests two Japanese ballads, then a popular song, a Japanese ballad, and a popular song in that order, first, the first and second sets of image data for Japanese ballads will be retrieved one after the other, then the first set of image data for popular songs, then the third set of image data for Japanese ballads, and finally the second set of image data for popular songs will be retrieved in that order.

With the example described above, however, because one song is about four minutes long, image data sufficient for only 14 to 15 Japanese ballads and the same number of popular songs is provided on the one video disk. Therefore, a person singing a great number of songs will possibly tire of seeing the same background image. Further, the displayed image corresponding to the first portion of the song leaves a particularly strong impression. Therefore, when only 14 to 15 image patterns are available for either Japanese ballads or popular songs, users of karaoke will possibly get the impression that the background images are always the same.

In a separate problem, when songs are thus divided into only two image genres (i.e., corresponding to Japanese ballads and popular songs), invariably some background images will be inappropriate for the content or gist of the song being sung. Although Japanese ballads can be handled with a comparatively small number of images, popular songs must include images for a great variety of song types including animation film songs, children's songs, folk songs, blues, rock and roll, movie theme songs, etc. Also, only 14 to 15 image patterns can not cope well with all situations, such as when a summer scene appears during a song about winter or when a tranquil scene appears during a up-tempo song.

### SUMMARY OF THE INVENTION

Some songs can be categorized to more than one image genre. These songs involve more than one theme or gist. Background images for these songs cannot be appropriately produced from image data of a single image genre. This problem can be solved by dividing or classifying images finely into an increased number of image genres so as to prepare image data better matching the content of each song. This, however, leads to an increase in the total number of image data, which is contrary to the demand for more compact devices.

It is therefore an objective of the present invention to overcome these problems, and to provide a video reproduction device which can produce background images appropriate for a number of karaoke songs by using a minimum amount of image data.

It is another objective to provide a video reproduction device which can produce background images appropriate for those songs that correspond to more than one image genre by using a minimum amount of image data.

It is a further objective of the present invention to provide a video reproduction device which can produce a great variety of background images for each karaoke song from a small amount of image data.

In order to attain the above objects and other objects, the present invention provides a video reproduction device for reproducing a series of images, the video reproduction device comprising: first image storing means for storing a first image unit group corresponding to a first image genre representative of a first type of image content, the first image unit group including a plurality of first image units with their image contents being of the first image type: second image storing means for storing a second image unit group corresponding to a second image genre representative of a second type of image content, the second image unit group including a plurality of second image units with their image contents being of the second image type; image reading means for reading several image units one after another from the first image storing means and from the second image storing means, in alternation, at every predetermined period of time, so as to produce a series of image units; and image displaying means for displaying the series of image units.

The second type of image content may be different from the first type of image content. Or, the second type of image content may be the same with the first type of image content. The video reproduction device may further comprise: song selecting means for selecting a song desired to be sung from the plurality of songs; music outputting means for outputting music of the song selected by the song selection means; and composite image producing means for composing lyrics of the song selected by the song selecting means and the series of image units to thereby produce a series of composite images, the image displaying means displaying the series of composite images in synchronization with the music outputted from the music outputting means.

The image reading means may preferably include first image reading means for reading a first image unit from the first image storing means and second image reading means for reading a second image unit from the second image storing means. The video reproduction device may further comprise control means for controlling the first and second image reading means to read the image units from the corresponding image storing means in alternation at the every predetermined period of time.

The first image unit group stored in the first image storing means may include a plurality of first image units of more than one different category, and the second image unit group stored in the second image storing means include a plurality of second image units of more than one different category. The image reading means may preferably read several image units one after another from the first image storing means and the second image storing means, in alternation, at every predetermined period of time, while preventing the image units of the same category from being consecutively read.

The first image storing means may store a plurality of first image unit groups corresponding to a plurality of first image genres, the plurality of first image genres being defined according to a first aspect to represent a plurality of first types of image contents, each group including a plurality of first image units with their image contents being of a corresponding first image genre defined at the first aspect. The second image storing means may store a plurality of second image unit groups corresponding to a plurality of second image genres, the plurality of second image genres being defined according to a second aspect to represent a plurality of second types of image contents, each group including a plurality of second image units with their image contents being of a corresponding second image genre defined at the second aspect. The music outputting means may include image genre selecting means for selecting a first appropriate image genre out of the plurality of first image genres according to the first aspect and for selecting a second appropriate image genre out of the plurality of second image genres according to the second aspect, the image content of the first appropriate image genre and the image content of the second appropriate image genre being appropriate for the song selected by the song selecting means at the first and second aspects, the image reading means reading several image units of the first and second appropriate image genres one after another from the first and second image storing means, in alternation, at every predetermined period of time.

According to another aspect, the present invention provides a video reproduction device for reproducing a series of images, the video reproduction device comprising: image storing means for storing a number of image unit groups corresponding to a number of different image genres, each of the number of image unit groups including a plurality of image units with their image contents being of a corresponding image genre; image genre selecting means for selecting desired at least one image genre out of the number of image genre; image reading means for reading several image units one after another from at least one image unit group of the selected at least one image genre, so as to produce a series of image units; control means for controlling, when the image genre selecting means selects more than one image genre, the image reading means to read the several image units one after another from the selected more than one image unit groups, while preventing the image units of the same image genre from being consecutively read from the image storing means; and image displaying means for displaying the series of image units.

The video reproduction device may further comprise: song selecting means for selecting a song desired to be sung from the plurality of songs, the image genre selecting means selecting at least one image genre appropriate for the selected song out of the number of image genre; music outputting means for outputting music of the song selected by the song selection means; and composite image producing means for composing lyrics of the song selected by the song selecting means and the series of image units to thereby produce a series of composite images, the image displaying means displaying the series of composite images in synchronization with the music outputted from the music outputting means.

The number of image genres may preferably be categorized into several sets of image genres which are determined according to several different aspects, each set of image genres including a plurality of image genres classified according to a corresponding aspect. The image genre selecting means may select one image genre appropriate for the selected song, out of each of at least one set of image genre according to the corresponding aspect, the control means controlling, when the image genre selecting means selects more than one image genre, the image reading means to read the several image units one after another from the selected more than one image unit group, while preventing the image units of the same image genre from being consecutively read.

Each image unit group stored in the image storing means may preferably include a plurality of image units of a corresponding image genre at more than one different category. The control means may control the image reading means to read several image units one after another from the selected at least one image unit group, while preventing the image units of the same category from being consecutively read out.

According to a further aspect, the present invention provides an image karaoke device for reproducing music of a song desired to be sung and for displaying an image in synchronization with the music, the image karaoke device comprising: song selecting means for selecting a song desired to be sung from the plurality of songs: music outputting means for outputting music of the song selected by the song selection means; image storing means for storing a number of image unit groups corresponding to a number of different image genres, each of the number of image unit groups including a plurality of image units with their image contents being of a corresponding image genre; image genre selecting means for selecting at least one image genre appropriate for the selected song out of the number of image genre; image reading means for reading several image units one after another from at least one image unit group of the selected at least one image genre, so as to produce a series of image units: control means for controlling, when the image genre selecting means selects more than one image genre, the image reading means to read the several image units one after another from the selected more than one image unit groups, while preventing the image units of the same image genre from being consecutively read from the image storing means; composite image producing means for composing lyrics of the song selected by the song selecting means and the series of image units to thereby produce a series of composite images; and composite image displaying means for displaying the series of composite images in synchronization with the music outputted from the music outputting means.

### BRIEF DESCRIPTION OF THE DRAWINGS

The above and other objects, features and advantages of the invention will become more apparent from reading the following description of the preferred embodiments taken in connection with the accompanying drawings in which:
Fig. 1 is a block diagram showing a structure of an image karaoke device according to a preferred embodiment of the present invention;
Fig. 2 is a block diagram showing a structure of a disk player device according to the embodiment of the present invention;
Fig. 3 is a flowchart showing processes implemented by a microcomputer of the disk player device shown in Fig. 2;
Fig. 4 is a flowchart showing process for a song genre AF implemented by the microcomputer of the disk player device;
Fig. 5 (A) is a chapter table showing correspondence between chapter numbers and reproduction chapter numbers for a song genre B;
Fig. 5 (B) is another chapter table showing correspondence between chapter numbers and reproduction chapter numbers for song genre AF;
Fig. 6 is a chart showing an example of random selection of images by the players 34a and 34b for the song genre AF; and
Fig. 7 is a chart showing an example of random selection of images by the players 34a and 34b according to a modification of the present invention.

### DETAILED DESCRIPTION OF THE INVENTION

An embodiment of an image karaoke device according to the present invention will be described below while referring to the accompanying drawings wherein like parts and components are designated by the same reference numerals to avoid duplicating description.

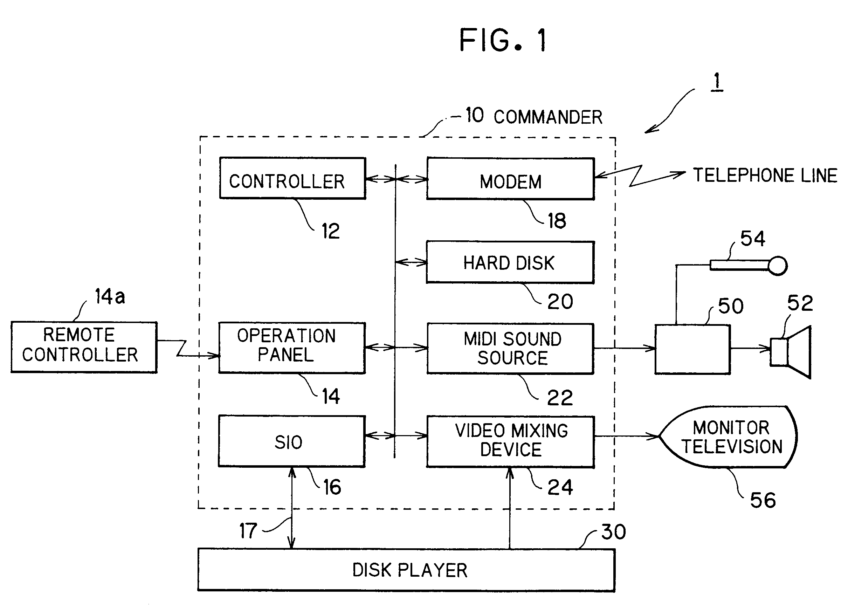

As is shown in Fig. 1, the image karaoke device 1 of the first embodiment includes a commander 10, a disk player device 30, an amplifier/mixer 50, a speaker 52, a microphone 54, and a monitor television 56.

As shown in Fig. 1, the commander 10 includes an operation panel 14, a serial input-output circuit (SIO) 16, a modem 18, a hard disk 20, a MIDI sound source 22, a video mixer 24, and a controller 12 mutually interconnected by a bus line.

The operation panel 14 is for selecting a song desired to be sung by the user, and for adjusting, for example, echo, volume, tone, balance between music and voice volume, and volume of music. The operation panel 14 is provided with a remote control unit 14a so that a user can select music and perform other operations at a distance from the operation panel 14.

The serial input-output circuit (SIO) 16 is connected to the disk player device 30. The serial input-output circuit 16 is an interface circuit for transmitting information on song genre (which will be described later) of the selected song to the disk player device 30 via a serial transmission line 17. In the present embodiment an RS232C cable is used for the transmission line 17.

The modem 18 is a modulation-demodulation unit connected to a telephone line. The modem 18 is for modulating signals sent to an external device (host computer) transmitted through, and for demodulating a signal received through, a transmission path via the telephone line. An example of a signal modulated by the modem 18 would be a signal containing information on types and frequency of songs requested by users. An example of a signal demodulated by the modem 18 would be a signal containing new song data, for continuously providing the karaoke device 1 of the present embodiment with new song data, sent during the night from the host computer to the commander 10 via the telephone line. The demodulated signal would then be stored in the hard disk 20.

The hard disk 20 is a memory unit for storing song data of a plurality of karaoke songs selectable by the user to be sung. The song data for each of the plurality of karaoke songs includes music data, lyric data and song genre data (which will be described later.) The music data is in the form according to a musical instrument digital interface (MIDI) standard.

The MIDI sound source 22 is connected to the amplifier/mixer 50 and is for storing musical sounds of various instruments. The MIDI sound source 22 is a sound source for producing music signals of various instruments based on the music data sent from the hard disk 20. The MIDI sound source 22 sends instrument music signal produced therein to the amplifier/mixer 50.

The video mixer 24 is connected to the disk player device 30 and the television monitor 56. The video mixer 24 is for superimposing lyric data sent from the hard disk 20 onto an NTSC image signal sent from the disk player device 30. The video mixer 24 tints lyrics that are displayed on the monitor television 56 in synchronization with output of the instrumental music so that the user knows which part of the music is being played.

The controller 12 is a microcomputer for controlling the entire commander 10. The controller 12 is provided with a song genre determining circuit for retrieving the song genre data from the song data of the user's selected song to determine the song genre of the user's selected song. The controller 12 performs various controls such as, transmitting information on the song genre to the disk player device 30, consecutively retrieving the music data and lyric data for the selected song from the hard disk 20 according to the progress of the music of the song, and sending lyric data to the video mixer 24 and song data to the MIDI sound source 22.

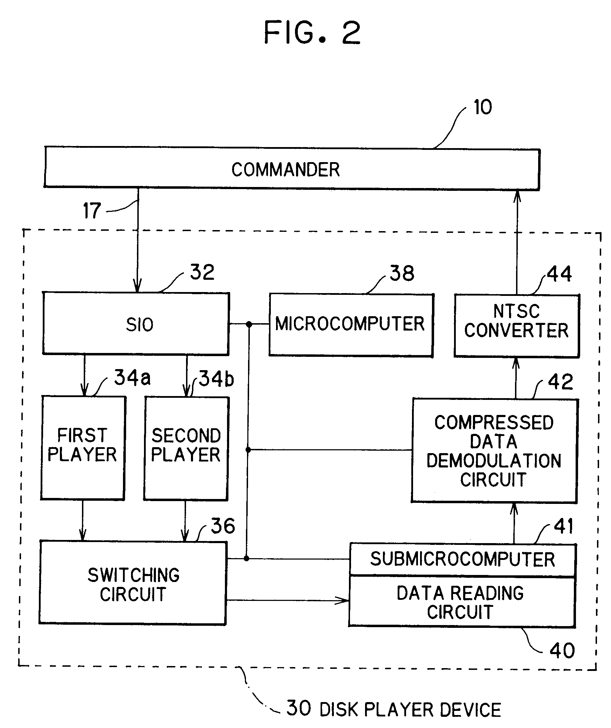

Next, an explanation will be provided for the disk player device 30 while referring to Fig. 2. The disk player device 30 includes a serial input/output circuit (SIO) 32, a first disk changeable player (referred to as a "first player," hereinafter) 34a, a second disk changeable player (referred to as a "second player," hereinafter) 34b, a switch circuit 36, a microcomputer 38, a data reading circuit 40, a compressed data demodulation circuit 42, and a NTSC convertor 44.

The serial input/output circuit (SIO) 32 is an interface circuit for receiving the information on the song genre of a selected song sent from the commander 10.

The first and second players 34a and 34b are both connected to the serial input/output circuit 32. The first and second players 34a and 34b are for selecting and reproducing chapters of appropriate image genre according to a random order, as will be described later. Each of the first and second players 34a and 34b includes a changer portion and a player portion (both not shown). Both the changer portion and the player portion are well known. The changer portion houses 15 image reproduction disks (not shown) and is for changing the reproduction disks according to a command from the microcomputer 38 or according to a predetermined order. The player portion is for playing an image reproduction disk changed and set on the player portion.

The image reproduction disks used in the present embodiment are video disks that are the size of a 12 cm compact disk (CD). Image data (video data) is stored in each of the image reproduction disks in compressed form according to Moving Picture Image Coding Experts Group (MPEG) standards. Because the image data is in compressed form, each CD size disk can contain long period images.

According to the present embodiment, 15 kinds of image reproduction disks A, B, C, D, E, F, AD, AE, AF, BD, BE, BF, CD, CE and CF are prepared. The six kinds of disks A - F store image data (video data) of six different image genres (image genres A through F,) respectively. Image genres A, B, and C are determined according to tempo (speed) of songs. Image genre A includes images appropriate for up-tempo songs, image genre B includes images appropriate for normal tempo songs, and image genre C includes images appropriate for slow tempo songs. Image genres D, E, and F are determined according to seasonal theme of songs. Image genre D includes images appropriate for songs with a winter theme. Image genre E includes images appropriate for songs with spring, fall, or no seasonal theme. Image genre F includes images appropriate for songs with a summer theme.

One group of images is provided for each of the image genres A through F. Each image group contains 24 separate image units, each image unit being a video image of 30 seconds long in the present invention. Each 30-second video image unit will be referred to as a "chapter," hereinafter. The chapters in each image genre group are numbered 1 through 24. Therefore, the chapters in the image group for image genre A, for example, will be referred to as A-1 through A-24. The 24 different chapters in each image genre are edited so that no particular story or plot connects the 24 different chapters.

Each of the disks A through F therefore stores a single group of images (24 chapters) of a corresponding genre. Accordingly, each disk stores, in total, 12 minutes long video data.

Each of remaining nine kinds of image reproduction disks AD, AE, AF, BD, BE, BF, CD, CE and CF stores image groups of two image genres: one from genres A, B, and C; and another from genres D, E, and F. In other words, the nine kinds of disks AD, AE, AF, BD, BE, BF, CD, CE and CF store image data of image genres A and D, A and E, A and F, B and D, B and E, B and F, C and D, C and E, and C and F, respectively. Each of the disk therefore stores two groups of images (48 chapters) of the corresponding two genres. Accordingly, each disk stores, in total, 24 minutes long video data.

The switching circuit 36 is a circuit connected to the first player 34a and the second player 34b for switching between transmission from the first player 34a and transmission from the second player 34b of image data in the compressed form to the data reading circuit 40. The data reading circuit 40 includes a sub-microcomputer 41 and is for reading, as digital data, the compressed image data sent from the switching circuit 36. The digital data read by the data reading circuit 40 is sent to the compressed data demodulation circuit 42. The compressed data demodulation circuit 42 is an electrical circuit for demodulating the compressed digital data sent from the data reading circuit 40 into an image signal. The image signal thus demodulated by the compressed data demodulation circuit 42 is sent to the NTSC convertor 44. The NTSC convertor 44 is an electrical circuit for converting the image signal demodulated by the compressed data demodulation circuit 42 into a commercial television signal (NTSC). The NTSC image signal converted by the NTSC convertor 44 is sent to the video mixer 24 of the commander 10.

The microcomputer 38 is for controlling overall operation of the disk player devices 30. For example, the microcomputer 38 is for executing processes for controlling the first and second players 34a and 34b in alternation to reproduce image units of different image genres from the disks.

According to the present invention, each karaoke song is categorized in a song genre for indicating which of the image genres A through F will provide appropriate background images for the karaoke song. In the present invention, the first three image genres A, B, and C are determined according to one aspect (tempo of songs) while the second three image genres C, D, and E are determined according to another aspect (seasonal theme). Songs can be characterized by only one aspect (tempo or seasonal theme) or by both aspects (tempo and seasonal theme), resulting in 15 types of song genre: A, B, C, D, E, F, AD, AE, AF, BD, BE, BF, CD, CE, and CF. One of these 15 song genres is assigned to each of the plurality of karaoke songs stored in the hard disk 20.

The three song genres A, B, and C include songs that can be characterized by their tempo but that have no particular seasonal theme. Songs of the song genres A, B and C therefore correspond to the image genre disks A, B and C, respectively. The three song genres D, E, and F include songs that can be characterized by their seasonal theme but that have no particular characteristics in tempo. Songs of the song genres D, E and F correspond to the image genre disks D, E and F, respectively. The remaining nine song genres AD, AE, AF, BD, BE, BF, CD, CE, and CF include songs that can be characterized both by a seasonal theme and by their tempo. Songs of the song genres AD, AE, AF, BD, BE, BF, CD, CE, and CF therefore correspond to both an image genre of the tempo image genres A, B and C and an image genre of the seasonal image genres D, E and F. Background images for songs that are characterized both by a seasonal theme and tempo include combinations of images from two image genres that are appropriate for both the corresponding seasonal theme and tempo. This combination of images properly match these songs. Songs of the song genres AD, AE, AF, BD, BE, BF, CD, CE, and CF therefore correspond to the image genre disks AD, AE, AF, BD, BE, BF, CD, CE, and CF, respectively.

Thus, the 15 types of song genres A, B, C, D, E, F, AD, AE, AF, BD, BE, BF, CD, CE, and CF correspond to the 15 kinds of video disks A, B, C, D, E, F, AD, AE, AF, BD, BE, BF, CD, CE, and CF, respectively. As described already, the changer portion of each of the disk players 34a and 34b houses the 15 kinds of video disks. When a karaoke song of either one of the 15 types of song genres is selected, the changer portion in each disk player sets the corresponding video disk on the player portion for reproduction, as will be described later.

The song data of each karaoke song stored in the hard disk 20 includes song genre data indicating the above-described song genre of the corresponding karaoke song.

A memory area (not shown) in the microcomputer 38 stores 15 chapter tables for the above-described 15 types of song genre. Each chapter table lists chapter numbers (A-1, A-2, and the like), which represent chapters of corresponding image group or groups, in correspondence with reproduction chapter numbers S. Reproduction chapter numbers S are integers used when a chapter of the image group or groups is randomly selected according to a random variable R generated during an image reproduction process in the disk player 30.

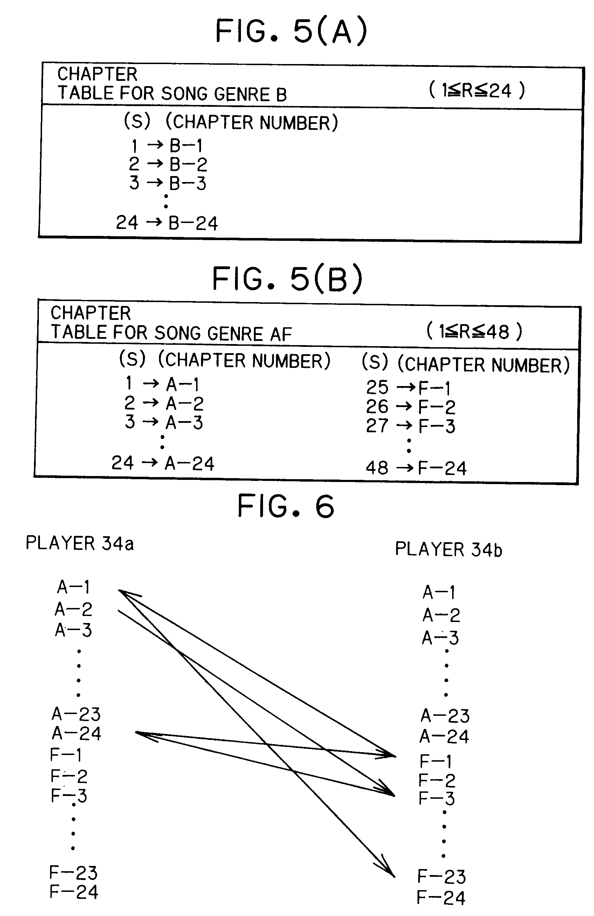

For example, when the selected song is a song from song genre B, only images from image genre B can correspond to the selected song. Accordingly, as shown in Fig. 5(A), the chapter table for song genre B lists reproduction chapter numbers S of 1 through 24 in correspondence with the chapter numbers B-1 through B-24.

When the selected song is a song from song genre AF, images from both image genres A and F can correspond to the selected song. Accordingly, as shown in Fig. 5(B), the chapter table for the song genre AF lists reproduction chapter numbers S of 1 through 24 in correspondence with the chapter numbers A-1 through A-24 and reproduction chapter numbers S of 25 through 48 in correspondence with chapter numbers F-1 through F-24.

According to the present invention, in order to produce background images for the songs of the song genres AD, AE, AF, BD, BE, BF, CD, CE, and CF, chapters of the corresponding two image genres are reproduced by the players 34a and 34b, respectively. The players 34a and 34b are controlled by the microcomputer 38 so that the player 34a may randomly select chapters of one image genre while the player 34b randomly selects chapters of another image genre. The switching circuit 36 is controlled by the microcomputer 38 so as to switch source of image data transmitted to the commander 10 alternately between the players 34a and 34b. In other words, the switching circuit 36 performs to switchingly control the players 34a and 34b to reproduce chapters in alternation.

Similarly, in order to reproduce background images for the songs of the song genres A through F, the players 34a and 34b are controlled to reproduce chapters from the corresponding genre in alternation.

Image genre table shown below indicates image genre(s) that should be reproduced by each of the players 34a and 34b for producing background images of karaoke songs in each song genre. This image genre table is also stored in the memory area of the microcomputer 38.

| SONG GENRE | FIRST PLAYER | SECOND PLAYER |
|---|---|---|
| A | A/- | -/A |
| B | B/- | -/B |
| C | C/- | -/C |
| D | D/- | -/D |
| E | E/- | -/E |
| F | F/- | -/F |
| AD | A/D | D/A |
| AE | A/E | E/A |
| AF | A/F | F/A |
| BD | B/D | D/B |
| BE | B/E | E/B |
| BF | B/F | F/B |
| CD | C/D | D/C |
| CE | C/E | E/C |
| CF | C/F | F/C |

| Image Genre Table | | |
|---|---|---|
| | | |

In order to produce a background image for a karaoke song of the song genre AD, for example, first the player 34a reproduces a chapter of the image genre A (or D), and then the player 34b reproduces a chapter of the image genre D (or A). Then, the player 34a again reproduces another chapter of the image genre A (or D). This operation is repeated until the song is completed. In each player, in order to reproduce a chapter of image genre A (or D), the changer portion sets a corresponding image genre disk AD on the player portion, and the player portion reproduces a chapter from the disk.

To operate the image karaoke device 1, a user chooses a song he/she wants to sing by manipulating the operation panel 14 of the commander 10 or the remote controller 14a. Then, the controller 12 starts retrieving the song data for the selected song from the hard disk 20. The controller 12 first determines the song genre of the user's selected song, based on the song genre data. The controller 12 then transmits information on the song genre through the SIO circuit 16 to the SIO circuit 32 of the disk player device 30. Then, the controller 12 consecutively retrieves lyric data and music data of the song data, in accordance with the progress of the song. The controller 12 transfers the lyric data to the video mixer 24. The controller 12 transfers the music data to the MIDI sound source 22. The lyric data and the music data are thus retrieved and supplied to the corresponding devices, in synchronization.

In the disk player device 30, the microcomputer 38 determines the song genre of the user's selected song, based on the supplied information on the song genre. Thus, the microcomputer 38 determines at least one image genre suited to the user's selected song. Then, the microcomputer 38 controls the first and second players 34a and 34b so as to randomly select and reproduce chapters of the corresponding image genre from the reproduction video disks located on the first and second players 34a and 34b. If the song genre of the selected karaoke song corresponds to two image genres, the microcomputer controls the first player 34a to reproduce chapters of one image genre while controlling the second player 34b to reproduce chapters of the other image genre. The switching circuit 36 is controlled by the microcomputer 38 to switchingly drive the players 34a and 34b to reproduce and transfer the image data to the data reading circuit 40, in alternation. The image data thus transferred to the data reading circuit 40 is further transferred to the demodulation circuit 42 and the NTSC converter 44 where the image data is transformed into NTSC image signals. The NTSC image signals are transferred from the NTSC converter 44 to the video mixer 24 of the commander 10. Thus, the disk player device 30 serves to reproduce image data from the image reproduction disks, produces the NTSC image signals, and transfers the NTSC image signals to the video mixer 24.

In the video mixer 24, the NTSC image signals are superimposed with the lyric data supplied from the hard disk 20, in synchronization with the music data, to produce composite image signals that are displayed on the monitor television 56. The NTSC image signals become the background scene on the monitor television 56. The thus obtained background image is of an image genre that properly matches the theme, content, and the like of the song selected by the user.

The music data supplied to the MIDI sound source 22 is transformed into analog instrumental music signals. The analog music signals are sent to the amplifier/mixer 50 where they are electrically amplified and mixed at an appropriate rate with the voice of the user who is singing the song into the microphone 54 in time with the music while referring to the lyrics. The signals with the music and voice mixed therein are outputted by the speaker 52.

The image karaoke device 1 having the above-described structure operates, as will be described below, to synchronously display images and play music of the user's selected song.

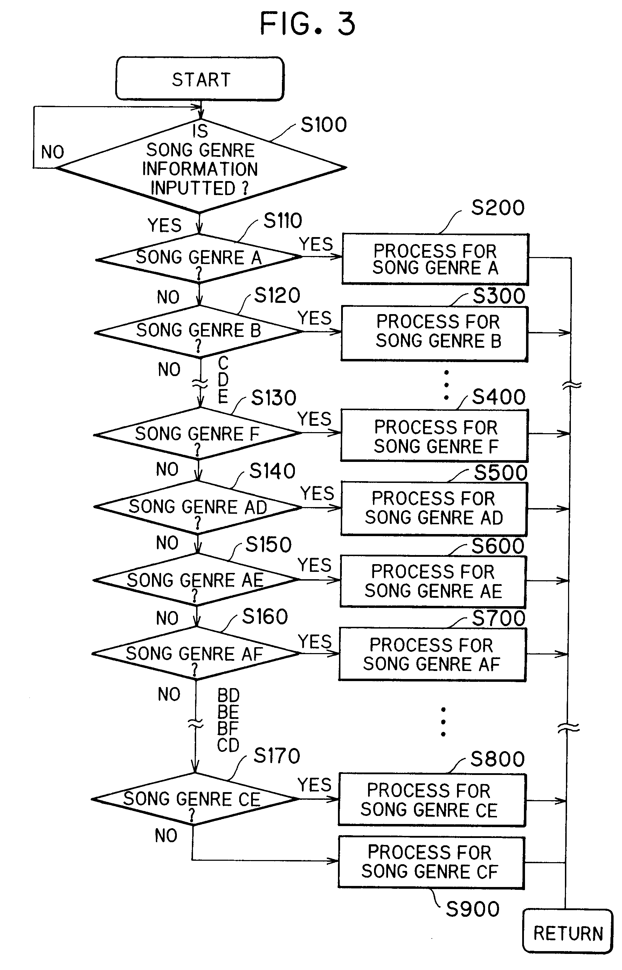

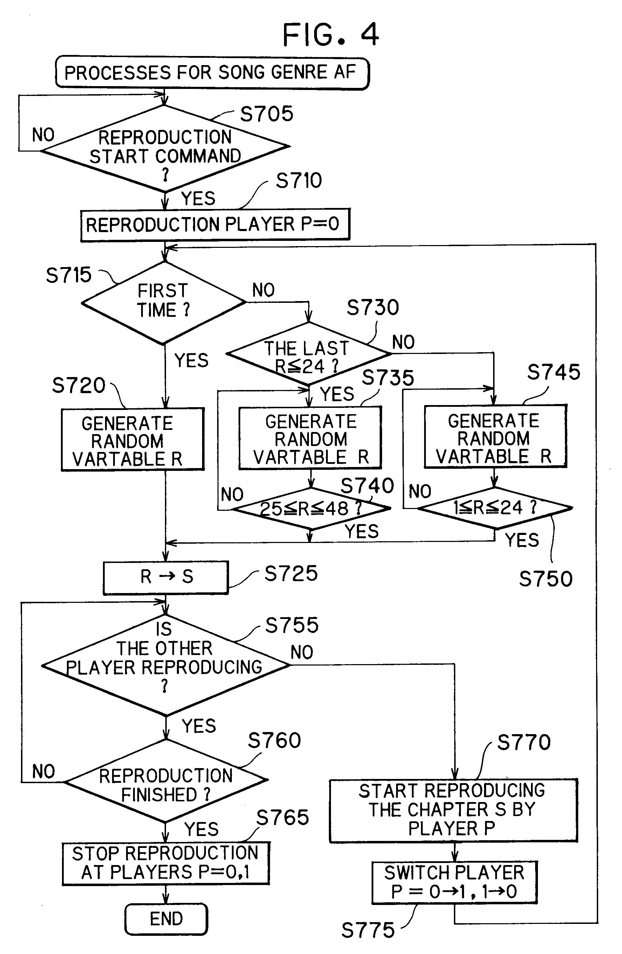

First, a user selects a desired song by manipulation of the operation panel 14 of the commander 10 or the remote controller 14a. As a result, the controller 12 in the commander 10 outputs a reproduction start command, and starts retrieving the song data for the selected song from the hard disk 20. The controller 12 first retrieves the song genre data for the selected song, based on which the controller 12 determines the song genre. The controller 12 then transmits the reproduce start command and the information on the song genre to the disk player device 30. The transmitted song genre information and reproduction start command are received by the disk player device 30. That is, the disk player device 30 starts conducting the following control process to randomly reproduce chapters. This control process will be described below while referring to the flowcharts shown in Figs. 3 and 4.

First, the microcomputer 38 judges whether or not the song genre information has been inputted from the commander 10, in step S100. If so (i.e., step S100 is "YES"), the program proceeds to step S110. Then, the microcomputer 38 determines, based on the song genre information, the song genre (i.e., which of the above 15 song genres) of the user's selected song, in steps S110 through S170. Then, process for the determined song genre is implemented in either one of the processes S200 through S900. If the program proceeds to step S170 and it is determined in S170 that the user's selected song is not of song genre CE, it can be determined that the song is from song genre CF. Accordingly, the program proceeds to step S900 where processes for song genre CF are performed.

The 15 types of processes shown in steps S200 through S900 are provided for when songs of the 15 types of song genre A, B, C, D, E, F, AD, AE, AF, BD, BE, BF, CD, CE, and CF are selected, respectively. The microcomputer 38 performs each process with referring to the image genre table and a corresponding chapter table. Now, as one example, an explanation will be provided, while referring to Fig. 4, for the process performed in S700 when a song with the song genre AF is selected by the user. This process is performed with referring to the chapter table shown in Fig. 5B, as described below.

When the user's selected song is determined as being of song genre AF, the microcomputer 38 first judges whether the reproduce start command has been inputted from the commander 10, in S705. The reproduction start command is for ordering to start reproducing a background image for the presently selected karaoke song. If so (i.e., "YES" in S705), a player number P is initially set at "0" in step S710. The player number P is for causing one of the first and second players 34a and 34b to play and can be either "0" or "1." In the preferred embodiment, when the player number P is "0," reproduction is performed by the first player 34a. When the player number is "1," reproduction is performed by the second player 34b. Thus, S710 selects the player 34a to play at the first run of this program.

After the reproduction player is thus initialized in step S710, the microcomputer 38 judges in S715 whether or not this time of reproduction is at the first run of the program. The judgement in S715 is for determining whether or not reproduction of background image for the presently selected song has already been started and some chapter has already been reproduced. If this time of operation is at the first run of the program and any chapter has not yet been reproduced (i.e., "Yes" in S715), the program directly proceeds to S720 to generate a random variable R.

On the other hand, if this reproduction is not for the first time but some chapter has already been reproduced (i.e., "No" in S715), it is determined that a chapter should be reproduced at this time from the image genre that has not been reproduced from during the latest reproduction. Accordingly, in S730, the microcomputer 38 judges whether a random variable R, which has been set in the last reproduction, is equal to or lower than 24. When it is judged that the latest set random variable R is equal to or lower than 24 (i.e., "Yes" in S730), it is determined that the latest reproduced chapter is of the image genre A. Therefore, the program proceeds to S735 and S740 to repeatedly generate a random variable R until the generated random variable R falls between 25 and 48, therefore indicating image genre F.

On the other hand, when the latest set random variable R is higher than 24 (i.e., "No" in S730), it is determined that the most recently reproduced chapter is from the image genre F. Accordingly, the program proceeds to S745 and S750 to repeatedly generate a random variable R until the generated random variable R falls between 1 and 24, thereby representing a chapter from image genre A.

The random variable R generated in S720, the random variable R generated in S735 and judged to fall in the range of 25 through 48 (i.e., "Yes" in S740), or the random variable R generated in S745 and judged to fall in the range of 1 through 24 (i.e., "Yes" in S750) is converted into a chapter number S indicating a chapter to be reproduced, in S725.

The judging steps S740 and S750 are conducted so that image chapters are not consecutively read out from the same image genre (i.e., same video disks) by the players 34a and 34b. When the selected karaoke song is of the song genre AF, chapters of the image genres A and F should be reproduced. The changer portion of each player locates a disk AF on the corresponding player portion. Accordingly, each player is controlled to select chapters from a total of 48 chapters: the 24 chapters from image genre A (chapter numbers A-1 through A-24); and the 24 chapters from image genre F (chapter numbers F-1 through F-24). Reproduction chapter numbers S of 1 through 24 therefore correspond to the chapters A-1 through A-24, while reproduction chapter numbers S of 25 through 48 corresponding to the chapters F-1 through F-24.

After the reproduction chapter number S is thus set as the random value R in step S725, the microcomputer 38 judges whether the other player (in this example, player number P is 1) is now reproducing a disk, in step S755. If not (i.e., "NO" in step S755), the microcomputer 38 controls the player with the present player number P (0 in this example) to reproduce a chapter with its chapter number corresponding to the reproduction number S in step S770, while referring to the chapter table of Fig. 5. For example, in the case where the selected song is of song genre AF as shown in Fig. 5(B), when the random variable R of 2 is generated to be set as the reproduction number S, the chapter with the chapter number of A-2 is reproduced.

Next, the player is changed in step S775. That is, if the player number P is "0" at present, it is changed to "1," or if it is "1" at present, it is changed to "0." The program then returns to step S715, whereupon processes in S715 and on are repeated.

Here, an illustrated example will be provided. During a first run of the program, a chapter is reproduced by the first player 34a, because player number P is set to "0" in step S710. When the random variable R generated in S720 is in the range of 1 through 24, the disk player 34a reproduces a chapter from image genre A. When the random variable R is in the range of 25 through 48, the disk player 34a reproduces a chapter from image genre F. During a second run of the program, a chapter is reproduced by the second player 34b. When the disk player 34a reproduces from the A image genre during the first run of the program, the disk player 34b reproduces a chapter from image genre F. When the disk player 34a reproduces from the F image genre during the first run of the program, the player 34b reproduces a chapter from image genre A. Thus, during a series of runs of the program, chapters from one (A or F) image genre are reproduced at one disk player in alternation with chapters from the opposite image genre (i.e., F if A and A if F) at the other disk player.

In each run of the program, if it is judged in step S755 that the other player is playing (i.e., "YES" in step S755), the microcomputer 38 judges whether the other player has finished its playing operation or whether a reproduction complete command has been inputted from the commander 10, in step S760. If not (i.e, "NO" in step S760), the program returns to step S755. Then, when the other player has finished its reproduction operation ("NO" in step S755), the presently set player is caused to perform its reproduction in step S770.

In this way, disks are played on the first player 34a and the second player 34b in alternation. When reproduction is determined as completed in step S760, reproduction at both the first and second players 34a and 34b is terminated in step S765 and this program is completed.

By performing the processes shown in Fig. 4 for the selected song of the song genre AF, chapters of image genre A and of image genre F are alternately reproduced in random combinations to be displayed on the monitor television 56 as background images. One example for a three minute song is shown in Fig. 6. In this example, six chapters are combined into a three minute series of images. Chapter A-2 from the disk player 34a is started, then chapter F-3 from the disk player 34b, chapter A-24 from the disk player 34a, chapter F-1 from the disk player 34b, chapter A-1 from the disk player 34a, and chapter F-23 from the disk player 34b are reproduced one after the other in order.

As described above, according to the present embodiment, when a selected karaoke song corresponds to more than one image genre that are defined in regards to more than one different aspect, image chapters of the corresponding image genres are combined into a series of background image for the karaoke song. Accordingly, it is possible to provide a background image properly matching the selected karaoke song.

A great many series of background images can be formed by combinations of the 30-second chapters. Even if a user requests many songs of the same song genre (in this example, song genre AF), a great many songs can be played before any one image appears at the start of two separate songs. The number of different images that can be displayed at the start portion of each song equals the number of chapters in two different disks of the corresponding image genres at two different disk players, that is, 96 (48 x 2 = 96) in this case. Therefore, a user will feel that there are a many more background images than are actually stored in the source of the image information. For this reason, background images supplied even from a small source of image information will keep the user's interest.

In the present embodiment, images are classified by more than one different aspect, such as tempo and seasonal theme. Thus classified images are combined in a manner corresponding to each song. The present embodiment can therefore provide a greater variety of images, relative to the case where images are classified simply into such as Japanese Ballads and popular musics. Accordingly, it becomes possible to decrease the total number of image chapters required for being stored in the image karaoke device. Additionally, a great variety of combination of the image chapters can provide a large variety of background images even for each song.

Additionally, according to the present embodiment, two players 34a and 34b are provided. Switching the players with the switching circuit 36 can immediately cause the chapters from the two players to be switched to be displayed. It is therefore possible to continuously display the chapters without any break between the chapters.

In the present embodiment, images are classified into six image genres. However, images may be classified into other various number of image genres. The image genres may be determined classified according to other various aspects.

According to the present embodiment, images are classified into two sets of image genres: the first set of A, B and C; and the second set of D, E and F. The two sets correspond to different aspects, i.e., tempo and seasonal theme. However, images can be further classified into three or more sets of image genre, the third or succeeding sets being determined according to aspects other than tempo or seasonal theme. When image genres are divided into three or more sets, there will always be some songs that can be classified into the three or more themes. For example, when image genres are divided into three sets, sortie songs will have characteristics that allow their classification by all three themes. Images (chapters) from three different image genres (one image genre of each set) can be selected from, while alternating between image genres, when such a song is played. In order to perform this operation, a further process may be added in parallel to the processes of S740 and S750 for judging whether the random variable R falls in a range of 49 to 72.

In the present embodiment, each disk is prepared for storing 24 chapters of the single image genre or 48 chapters for the two image genres. However, each disk is prepared for storing 144 chapters (72 minutes long images) in total of the six image genre A through F.

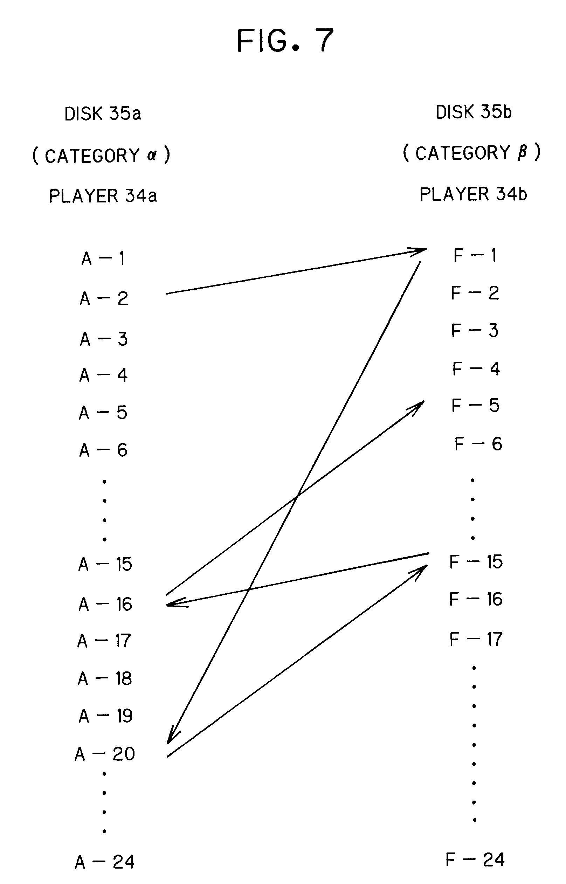

A modification of the present embodiment will be described below with reference to Fig. 7.

Images of each image genre may be further classified into a plurality of categories. When randomly reading out several image chapters one after another from corresponding image genre or genres, the microcomputer 38 may control the players 34a and 34b so as not to consecutively read out chapters from the same category.

For example, images of each image genre may be classified into two categories: a first category α with images of people; and a second category β with images of scenery.

As described above, contents of the image chapters are not related by any particular story or plot. However, showing chapters of the same category in succession may possibly mislead a viewer to believe that some sort of connecting plot exists between the chapters. This may give the viewer a strange impression. Showing image chapters from different categories in succession, however, prevents a viewer from assuming a connecting plot exists, and so does not leave a viewer with a strange impression.

The structure of the image karaoke device of the present modification is the same as that of the embodiment shown in Figs. 1, 2, and 5. According to the present modification, two groups of video disks are prepared: a first group of video disks, each disk of which stores the 144 chapters (i.e., 24 chapters for each of the six image genres) which are all directed to the first category α; and a second group of video disks, each of which stores the 144 chapters (i,e., 24 chapters for each of the six image genres) which are all directed to the second category β.

The eight video disks housed in the changer portion of each of the first and second players 34a and 34b include four video disks of the first group and four video disks of the second group. In the present modification, the first player 34a is controlled by the microcomputer 38 so that its changer portion may select one of the four video disks of the first group to locate it on its player portion. The second player 34b is controlled so that its changer portion may select one of the four video disks of the second group to locate it on its player portion. Accordingly, the first player 34a always reproduces chapters of the first category α to display images of people. The second player 34b always reproduces chapters of the second category β to display images of scenery.

The image karaoke device of this modification achieves control processes substantially the same as those of Figs. 3 and 4. The disk players 34a and 34b are therefore alternately driven to randomly select the chapters of the corresponding image genre(s) from the video disks located thereon. Accordingly, the chapters of the first and second categories α and β are alternately selected to be displayed on the monitor television 56. Assume now that a disk 35a of the first category α and a disk 35b of the second category β are located on the disk players 34a and 34b, respectively, and that the selected song is of the song genre AF. In this case, for example, as shown in Fig. 7, Chapter A-2 of disk 35a, Chapter F-1 of disk 35b, Chapter A-20 of disk 35a, Chapter F-15 of disk 35b, Chapter A-16 of disk 35a, and Chapter F-5 of disk 35b are reproduced one after the other in this order. Accordingly, images of people from image genre A and images of scenery from image genre F are alternately reproduced for display, Because each chapter is only 30 seconds long, each category of image is not displayed for more than 30 seconds, and a user will not tire of the images from same category. Thus alternately displaying images of the different categories can provide large variety in the series of background images.

This modification describes the first category α as images of people and the second category β as images of scenery. However, the image categories are not limited to those image categories α and β. Various types of different categories may be defined, as long as images of different categories do not mislead a viewer to believe that any sort of connecting plot exists between the images even if the images are displayed in succession.

In the above description, the two players 34a and 34b are provided for reproducing the first and second category of images. However, three or more players may be provided for reproducing three or more category of images. In this case, the three or more players should be controlled so that the same player is not consecutively driven. The three or more players may preferably be controlled to reproduce the three or more category images, in alternation.

In the above-description, each video disk is prepared for contains a single category of image chapters. However, both of the two categories may be stored in each video disk. In this case, 12 chapters of category α and 12 chapters of category β are stored for 24 chapters of each image genre. Chapters of both the first and second categories are assigned to reproduction chapter numbers S. In order to alternately and randomly select the chapters from the first and second categories of the corresponding image genre(s), the range for limiting the generated random value R determined in S740 and S750 in the process of Fig. 4 may be determined dependently on the reproduction chapter numbers S now determined for the first and second categories.

As described above, according to the present invention, images are classified into a plurality of image genres which are determined according to more than one aspect of song. Some songs are characterized by one aspect, and therefore correspond to one image genre determined based on this aspect. Background images for these songs are therefore produced by reproducing a series of image units of this one image genre. There are some other songs that are characterized by more than one aspects. These songs correspond to more than one image genre that are determined based on these more than one aspects. Background images for these songs are constructed from a combination of image units of these more than one image genre and therefore properly match the contents of the songs. With this method, it is possible to provide a background image which can properly match each song, regardless of the small amount of image genre. In addition, by randomly selecting the image units into background images, it is possible to provide a great variety of background images.

The image karaoke device of the present invention therefor can produce background images appropriate for a number of karaoke songs, regardless of a small amount of image data. The image karaoke device can produce background images appropriate for songs that have contents corresponding to more than one image genre, regardless of the small amount of image data. The image karaoke device can produce a great variety of background images for each karaoke song regardless of the small amount of image data.

While the invention has been described in detail with reference to the specific embodiment thereof, it would be apparent to those skilled in the art that various changes and modifications may be made therein without departing from the spirit of the invention.

In the above-described embodiment, when a karaoke user selects a song by operating the operation panel 14 or the remote control 14a, the controller 12 in the commander 10 determines the song genre of the song, based on the song genre data. Then, the controller 12 transmits the information on the song genre to the disk player device 30. However, the controller 12 may simply transmit the song genre data to the disk player device 30 and the microcomputer 38 in the disk player device 30 may determine the song genre, based on the song genre data.

Additionally, in the above-described embodiment, the song data for each karaoke song stored in the hard disk 20 contains the song genre data. Instead, the hard disk 20 may simply store a table listing a song number indicating each karaoke song and a song genre of the corresponding karaoke song. In this case, the controller 12 may refer to the table and determine the song genre of the user's selected song. When a new song data is inputted to the hard disk 20 from the telephone line, a new table listing the song number and the song genre of the new song is also inputted into the hard disk 20.

The above-described embodiment employs the video disks of CD sizes in which data are stored in compressed form and therefore which can store almost one hour of images in total with a small size. Accordingly, the disk player device 30 storing the plurality of CD disks can be made compact. However, the image karaoke device of the present invention can employ general types of video disks.

In the present embodiment, disks are reproduced on a two system image supply source constructed from the first and second players 34a and 34b. However, three or more image supply sources (players, and the like) can be used. Reproduction images can be read at random on these and displayed.

The nine disks AD, AE, AF, BD, BE, BF, CD, CE, and CF are not necessarily used. The changer portion of each of the disk players 34a and 34b may house only the six disks A through F therein. The six disks A through F are selected in combination to correspond to the nine song genres AD, AE, AF, BD, BE, BF, CD, CE, and CF. For example, when a song of a song genre AF is selected, the changer portion in the disk player 34a sets a disk A or F and the changer portion in the disk player 34b sets the opposite disk (i.e., F if A and A if F), in accordance with random variables R generated in the process of Fig. 4.

As described already, each disk may store image data of all the six image genres A through F. However, each disk may store image data of other several number of image genres, for example, of three or four image genres.

In the above-described embodiment, the image reproduction device of the present invention is applied to image karaoke device. However, the image reproduction device of the present invention can be applied for devices other than image karaoke device. The same set up can be used for providing background music or background videos to eating and drinking establishments and to special event grounds.

## Claims

1. A video reproduction device for reproducing a series of images, the video reproduction device comprising:
first image storing means for storing a first image unit group corresponding to a first image genre representative of a first type of image content, the first image unit group including a plurality of first image units with their image contents being of the first image type;
second image storing means for storing a second image unit group corresponding to a second image genre representative of a second type of image content, the second image unit group including a plurality of second image units with their image contents being of the second image type;
image reading means for reading several image units one after another from the first image storing means and from the second image storing means, in alternation, at every predetermined period of time, so as to produce a series of image units; and
image displaying means for displaying the series of image units.

2. A video reproduction device of claim 1, wherein the second type of image content is different from the first type of image content.

3. A video reproduction device of claim 1, wherein the second type of image content is the same with the first type of image content.

4. A video reproduction device of claim 1, 2 or 3, further comprising:
song selecting means for selecting a song desired to be sung from the plurality of songs;
music outputting means for outputting music of the song selected by the song selection means; and
composite image producing means for composing lyrics of the song selected by the song selecting means and the series of image units to thereby produce a series of composite images, the image displaying means displaying the series of composite images in synchronization with the music outputted from the music outputting means.

5. A video reproduction device of claim 4, wherein the image reading means includes first image reading means for reading a first image unit from the first image storing means and second image reading means for reading a second image unit from the second image storing means,
and further comprising control means for controlling the first and second image reading means to read the image units from the corresponding image storing means in alternation at the every predetermined period of time.

6. A video reproduction device of claim 4 or 5, wherein the music outputting means includes:
music information storing means for storing information on music and lyrics of a plurality of songs, the song selecting means selecting one song desired to be sung from the plurality of songs, information on the music and lyrics of which are stored in the music information storing means; and
music reproducing means for reproducing music of the song selected by the song selection means based on the information stored in the music information storing means.

7. A video reproduction device of claim 4, 5 or 6, wherein the image reading means includes random selecting means for randomly selecting several image units one after another from the first image storing means and the second image storing means, in alternation.

8. A video reproduction device of claim 4, 5, 6 or 7, wherein the first image unit group stored in the first image storing means include a plurality of first image units of more than one different category,
wherein the second image unit group stored in the second image storing means include a plurality of second image units of more than one different category, and
wherein the image reading means reads several image units one after another from the first image storing means and the second image storing means, in alternation, at every predetermined period of time, while preventing the image units of the same category from being consecutively read.

9. A video reproduction device of claim 4,
wherein the first image storing means stores a plurality of first image unit groups corresponding to a plurality of first image genres, the plurality of first image genres being defined according to a first aspect to represent a plurality of first types of image contents, each group including a plurality of first image units with their image contents being of a corresponding first image genre defined at the first aspect,
wherein the second image storing means stores a plurality of second image unit groups corresponding to a plurality of second image genres, the plurality of second image genres being defined according to a second aspect to represent a plurality of second types of image contents, each group including a plurality of second image units with their image contents being of a corresponding second image genre defined at the second aspect, and
wherein the music outputting means includes image genre selecting means for selecting a first appropriate image genre out of the plurality of first image genres according to the first aspect and for selecting a second appropriate image genre out of the plurality of second image genres according to the second aspect, the image content of the first appropriate image genre and the image content of the second appropriate image genre being appropriate for the song selected by the song selecting means at the first and second aspects, the image reading means reading several image units of the first and second appropriate image genres one after another from the first and second image storing means, in alternation, at every predetermined period of time.

10. A video reproduction device of claim 9, wherein the image reading means includes random selecting means for randomly selecting several image units one after another from the first and second appropriate image genre, in alternation.

11. A video reproduction device of claim 9 or 10,
wherein each of the plurality of first image unit groups stored in the first image storing means include a plurality of first image unite of a corresponding first image genre at more than one different category,
wherein each of the plurality of second image unit groups stored in the second image storing means include a plurality of second image units of a corresponding second image genre at more than one different category, and
wherein the image reading means reads several image units one after another from the first and second appropriate image genre, in alternation, at every predetermined period of time, while preventing the image units of the same category from being consecutively read out of the first and second appropriate image genre.

12. A video reproduction device of claim 9, 10 or 11,
wherein the first image storing means includes a plurality of first video disks each for storing a first image unit group of a corresponding first image genre, and the second image storing means includes a plurality of second video disks each for storing a second image unit group of a corresponding second image genre.

13. A video reproduction device of claim 12,
wherein the image reading means includes a first disk player for reading a first image unit from one of the plurality of first video disks, the first disk player including first disk selecting means for selecting a first video disk corresponding to the first appropriate image genre, out of the plurality of first video disks, and first disk reproducing means for randomly selecting and reproducing an image unit from the selected first video disk, and
wherein the image reading means includes a second disk player for reading a second image unit from one of the plurality of second video disks, the second disk player including second disk selecting means for selecting a second video disk corresponding to the second appropriate image genre, out of the plurality of second video disks, and second disk reproducing means for randomly selecting and reproducing an image unit from the selected second video disk.

14. A video reproduction device of claim 9, 10, 11, 12 or 13, the plurality of first image genres are defined according to an aspect of speed, and the plurality of second image genres are defined according to an aspect of seasonal theme.

15. A video reproduction device of claim 11, the more than one category include a first category representative of images of people and a second category representative of images of scenery.

16. A video reproduction device for reproducing a series of images, the video reproduction device comprising:
image storing means for storing a number of image unit groups corresponding to a number of different image genres, each of the number of image unit groups including a plurality of image units with their image contents being of a corresponding image genre;
image genre selecting means for selecting desired at least one image genre out of the number of image genre;
image reading means for reading several image units one after another from at least one image unit group of the selected at least one image genre, so as to produce a series of image units;
control means for controlling, when the image genre selecting means selects more than one image genre, the image reading means to read the several image units one after another from the selected more than one image unit groups, while preventing the image units of the same image genre from being consecutively read from the image storing means; and
image displaying means for displaying the series of image units.

17. A video reproduction device of claim 16, further comprising:
song selecting means for selecting a song desired to be sung from the plurality of songs, the image genre selecting means selecting at least one image genre appropriate for the selected song out of the number of image genre;
music outputting means for outputting music of the song selected by the song selection means; and
composite image producing means for composing lyrics of the song selected by the song selecting means and the series of image units to thereby produce a series of composite images, the image displaying means displaying the series of composite images in synchronization with the music outputted from the music outputting means.

18. A video reproduction device of claim 17, wherein the number of image genres are categorized into several sets of image genres which are determined according to several different aspects, each set of image genres including a plurality of image genres classified according to a corresponding aspect, and
wherein the image genre selecting means selects one image genre appropriate for the selected song, out of each of at least one set of image genre according to the corresponding aspect, the control means controlling, when the image genre selecting means selects more than one image genre, the image reading means to read the several image units one after another from the selected more than one image unit group, while preventing the image units of the same image genre from being consecutively read.

19. A video reproduction device of claim 18, wherein each image unit group stored in the image storing means includes a plurality of image units of a corresponding image genre at more than one different category, and
wherein the control means controls the image reading means to read several image units one after another from the selected at least one image unit group, while preventing the image units of the same category from being consecutively read out.

20. A video reproduction device of claim 18, the more than one set of image genre include a set of image genres determined according to an aspect of speed and another set of image genres determined according to an aspect of seasonal theme.

21. A video reproduction device of claim 19, the more than one category include a first category representative of images of people and a second category representative of images of scenery.

22. An image karaoke device for reproducing music of a song desired to be sung and for displaying an image in synchronization with the music, the image karaoke device comprising:
song selecting means for selecting a song desired to be sung from the plurality of songs;
music outputting means for outputting music of the song selected by the song selection means;
image storing means for storing a number of image unit groups corresponding to a number of different image genres, each of the number of image unit groups including a plurality of image units with their image contents being of a corresponding image genre;
image genre selecting means for selecting at least one image genre appropriate for the selected song out of the number of image genre;
image reading means for reading several image units one after another from at least one image unit group of the selected at least one image genre, so as to produce a series of image units;
control means for controlling, when the image genre selecting means selects more than one image genre, the image reading means to read the several image units one after another from the selected more than one image unit groups, while preventing the image units of the same image genre from being consecutively read from the image storing means;
composite image producing means for composing lyrics of the song selected by the song selecting means and the series of image units to thereby produce a series of composite images; and
composite image displaying means for displaying the series of composite images in synchronization with the music outputted from the music outputting means.
